# EUROPEAN PATENT SPECIFICATION

(11) **EP 3 101 926 B1**
(45) Date of publication and mention of the grant of the patent: **10.03.2021**
(21) Application number: 14881174.8
(22) Date of filing: 29.01.2014
(51) Int. Cl.: H04W 4/24, H04L 12/14

(54) **CHARGING PROCESSING METHOD, CENTRALIZED NETWORK CONTROL NODE AND FUNCTION NODE**
VERRECHNUNGSVERARBEITUNGSVERFAHREN, ZENTRALISIERTER NETZWERKSTEUERKNOTEN UND FUNKTIONSKNOTEN
PROCÉDÉ DE GESTION DE FACTURATION, NOEUD DE COMMANDE DE RÉSEAU CENTRALISÉ ET NOEUD DE FONCTION

(43) Date of publication of application: 07.12.2016
(73) Proprietor: Huawei Technologies Co., Ltd., Longgang District Shenzhen, Guangdong 518129 (CN)
(72) Inventor: LIN, Meixin, Shenzhen Guangdong 518129 (CN); ZHANG, Wei, Shenzhen Guangdong 518129 (CN); PENG, Chenghui, Shenzhen Guangdong 518129 (CN)
(74) Representative: Pfenning, Meinig & Partner mbB
(86) International application number: PCT/CN2014/071814
(87) International publication number: WO 2015/113284

(56) References cited:
- EP-A1- 2 509 256
- CN-A- 1 820 455
- CN-A- 101 409 954
- US-A1- 2012 300 615
- US-A1- 2013 279 521
- TRANORIS CHRISTOS ET AL: "Integrating OpenFlow in IMS Networks and Enabling for Future Internet Researchand Experimentation", 1 January 1901 (1901-01-01), NETWORK AND PARALLEL COMPU; [LECTURE NOTES IN COMPUTER SCIENCE; LECT.NOTES COMPUTER], SPRINGER INTERNATIONAL PUBLISHING, CHAM, PAGE(S) 77 - 88, XP047293995, ISSN: 0302-9743 ISBN: 978-3-642-24748-4 * the whole document *

## Description

### TECHNICAL FIELD

The present invention relates to the field of communications technologies, and in particular, to a charging processing method, a centralized network control node and a function node.

### BACKGROUND

When using various network services provided by operators, service providers, and the like, users need to pay proper fees according to charging policies specified by the operators, the service providers, and the like. To be compatible with multiple access modes such as a mobile network and a wireless local area network, currently a uniform policy and charging control (Policy and Charging Control, PCC for short below) architecture is generally used to perform charging control management on service data flows of the users.

An existing PCC architecture mainly includes functional entities such as a policy and charging enforcement function (Policy and Charging Enforcement Function, PCEF for short below), a policy and charging rules function (Policy and Charging Rules Function, PCRF for short below), an application function (Application Function), an online charging system (Online Charging System, OCS for short below), an offline charging system (Offline Charging System, OFCS for short below), and a subscription profile repository (Subscription Profile Repository, SPR for short below). The PCEF is configured to execute a related charging function on a service data flow of a user according to a charging policy obtained from the PCRF.

Currently, a function of the PCEF is integrated in gateway devices such as a serving GPRS support node (Serving GPRS Support Node, SGSN for short below) and a packet data gateway (Packet Data Gateway, PDG for short below), performance expansion of the PCEF is limited by performance of these gateway devices, and related configuration cannot be flexibly performed. In addition, because the PCEF needs to perform processing, such as centralized charging control and data flow detection, on service data flows of a large quantity of users, the PCEF needs to have higher performance, and moreover, processing efficiency is usually relatively low.

US 2013/0279521 A1 describes a PCC architecture with a PCRF and a PCEF, in which a Quality of Service (QoS) selection function is used to change QoS Level to adapt e.g. a maximum bit rate/bandwidth allowed for an uplink direction or a downlink direction, a guaranteed bit rate allowed for the uplink or the downlink direction or the like. Each QoS Level is associated with a respective tariff/charging rate.

EP 2 509 256 A1 describes a flow based charging apparatus including a session initiating module, configured to initiate a charging session for performing the flow based charging on the bearer; and a charging control module, configured to, when a charging triggering event is detected, interact with a charging system through the charging session to perform charging control on the service flows on the bearer and on a traffic offload bearer of the bearer.

Tranoris, Christos et. Al describe in "Integrating OpenFlow in IMS Networks and Enabling for Future Internet Researchand Experimentation", Lecture Notes in Computer Sciences, Springer International Publishing, Pages 77 to 88, ISSN: 0302-9743, how OpenFlow may be integrated into an IP Multimedia System (IMS) network.

### SUMMARY

For the foregoing existing problem, the present invention provides a charging processing method, a centralized network control node, a function node, and a system, which are used to overcome a disadvantage in the prior art that performance expansion of a PCEF is limited by performance of a gateway device, configuration cannot be flexibly performed, and processing efficiency is low.

The invention provides a centralized network control node per claim 1 and its corresponding charging processing method per claim 6 as well as a function node per claim 4 and its corresponding charging processing method per claim 9. Preferred embodiments are disclosed in the dependent claims.

According to the charging processing method, the centralized network control node and the function node that are provided in the present invention, a charging control function is divided, control plane functions are set in the SNC in a centralized manner. The SNC processes the control plane functions in a centralized manner in a charging processing process of each user, that is, the SNC obtains a charging policy of a service data flow to be processed, and interacts with a charging system to complete charging settlement. An independent FN completes data plane functions in charging processing, that is, the FN charges, according to the charging policy, the service data flow to be processed, and reports charging information to the SNC. Functions of a control plane and processing of a data plane are separated in a charging process, and are separately processed by different functional entities. When an FN in a network cannot meet a requirement, a charging processing capability of the network can be expanded as long as an FN is added, which facilitates implementation of flexible configuration. In addition, the control plane is separated from the data plane, which facilitates centralized charging control and distributed data processing, and helps improve processing efficiency.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic composition diagram of a charging processing system according to Embodiment 1 of the present invention;
FIG. 2 is a flowchart of a charging processing method according to Embodiment 2 of the present invention;
FIG. 3 is a flowchart of a charging processing method according to Embodiment 3 of the present invention;
FIG. 4 is a schematic structural diagram of a centralized network control node according to Embodiment 4 of the present invention;
FIG. 5 is a schematic structural diagram of a function node according to Embodiment 5 of the present invention;
FIG. 6 is a schematic structural diagram of a network control device according to Embodiment 6 of the present invention; and
FIG. 7 is a schematic structural diagram of a network processing device according to Embodiment 7 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention.

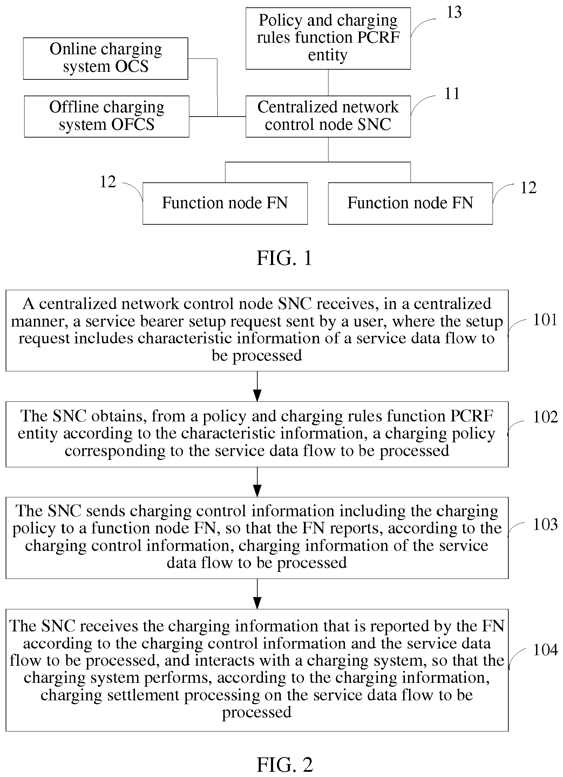

FIG. 1 is a schematic composition diagram of a charging processing system according to Embodiment 1 of the present invention. As shown in FIG. 1, the charging processing system provided in this embodiment may be applied to a case in which a service data flow of a user in a wireless communications network is charged. In this embodiment, an existing PCC architecture is improved, and control plane functions and data plane functions of a PCEF in the existing PCC architecture are separated. Specifically, the SNC described in this embodiment executes the control plane functions in charging processing, and performs centralized charging control on service data flows of users. The FN described in this embodiment executes the data plane functions in charging processing, for example, charging the service data flows of the users and reporting charging information to the SNC. Multiple independent FNs may be deployed in the wireless network, to meet distributed processing on charging information of a large quantity of users. Specifically, the charging processing system provided in this embodiment includes:
a centralized network control node SNC 11, a function node FN 12, and a policy and charging rules function PCRF entity 13.

As shown in FIG. 1, the SNC 11 in the charging processing system is mainly responsible for performing signaling interaction with the PCRF entity 13 and a charging system such as an online charging system OCS or an offline charging system OFCS, executing a charging control function, and delivering charging control information to the FN 12. The FN 12 is responsible for reporting charging information of a service data flow of a user according to the charging control information. In addition, there may be multiple FNs 12 in this embodiment. Therefore, the SNC 11 may select, according to a processing capability of each FN 12, an FN 12 to report charging information of a service data flow of a user.

It should be noted that, interaction between the SNC 11 and the FN 12 in this embodiment is implemented by extending a widely used OpenFlow standard protocol that is based on software-defined networking, that is, by extending an OpenFlow standard protocol interface between the SNC 11 and the FN 12, and adding a new message type and a new field.

Specifically, the SNC 11 is configured to: receive, in a centralized manner, a service bearer setup request sent by a user, obtain, from the PCRF entity 13 according to characteristic information, which is included in the setup request, of a service data flow to be processed, a charging policy corresponding to the service data flow to be processed, send charging control information including the charging policy to the FN 12, receive charging information that is reported by the FN 12 according to the charging control information and the service data flow to be processed, and interact with a charging system, so that the charging system performs, according to the charging information, charging settlement processing on the service data flow to be processed.

The FN 12 is configured to report, according to the charging control information, the charging information of the service data flow to be processed.

In this embodiment, the SNC 11 processes a charging control function on service data flows of users in a centralized manner, that is, the SNC 11 receives, in a centralized manner, service bearer setup requests sent by the users, and selects, according to a processing capability of each FN 12 existing in the system, an FN 12 used to perform charging processing. Because processes of charging processing on the service data flows of the users are different, an example in which charging processing is performed on a service data flow of only one user is used below for description.

When receiving the service bearer setup request sent by the user, the SNC 11 obtains a corresponding charging policy from the PCRF entity 13 according to the characteristic information, which is carried in the request, of the service data flow to be processed, where the characteristic information is, for example, user identifier information, service bearer type information, and service type information. The user identifier information may be, for example, identifier information of a terminal device of the user, for example, an IMSI. The service bearer type information indicates a network used by the user, and the network may be, for example, a GPRS or a WLAN. The service type information indicates a type of a service, such as WeChat, QQ, or video browsing, currently performed by the user. The charging policy describes information about rules for charging various service applications, to which the user subscribes, when the user is using the service applications.

Specifically, in the process of obtaining the charging policy from the PCRF entity 13 according to the characteristic information, the SNC 11 is specifically configured to:
send a charging policy obtaining request including the characteristic information to the PCRF entity 13; and
receive the charging policy that is sent by the PCRF entity 13 after the PCRF entity 13 obtains, by means of querying according to the characteristic information, the charging policy corresponding to the service data flow to be processed.

Then, the SNC 11 sends, by using an expanded OpenFlow standard protocol interface, the charging control information including the charging policy to the FN 12. Specifically, the charging control information is carried in an OpenFlow standard message, OFPT_FLOW_MOD, and is then sent to the FN 12, so that after receiving the OFPT_FLOW_MOD, the FN 12 obtains, by means of parsing, the charging control information included in the OFPT_FLOW_MOD message, and reports, according to the charging control information, the charging information of the service data flow to be processed.

Specifically, the SNC 11 receives an OpenFlow standard message OFPT_FLOW_REMOVED that is reported by the FN 12 according to the charging control information and the service data flow to be processed and that carries the charging information, and learns, by parsing the OFPT_FLOW_REMOVED, the charging information of the service data flow to be processed, so as to interact with the charging system, such as an OCS or an OFCS, so that the charging system performs, according to the charging information, charging settlement processing on the service data flow to be processed.

Further, when the charging system is an OCS, generally, the charging control information sent by the SNC 11 to the FN 12 further includes an available credit limit, so that the FN 12 may monitor, according to the available credit limit obtained by parsing the OFPT_FLOW_MOD message, a used limit of the service data flow to be processed. When it is determined, according to the charging policy and the available credit limit that are in the charging control information, that a difference between the used credit limit of the service data flow to be processed and the available credit limit reaches a preset threshold, the FN 12 sends an OpenFlow standard message Packet-in to the SNC 11, where the Packet-in message carries the used credit limit and a new credit limit that is applied for, so that after receiving the Packet-in message, the SNC 11 sends, to the FN 12, the OpenFlow standard message OFPT_FLOW_MOD carrying the new credit limit, to respond to the Packet-in message.

In this embodiment, functions of a control plane and processing of a data plane are separated in a charging process, a functional entity SNC is responsible for control plane functions, an FN is responsible for data plane functions in charging processing, and interaction between the SNC and the FN is implemented by extending an OpenFlow standard protocol interface. When the FN already existing in a network cannot meet a requirement, a charging processing capability of the network can be expanded as long as an FN is added, which facilitates implementation of flexible configuration. In addition, the control plane is separated from the data plane, which facilitates centralized charging control and distributed data processing, and helps improve processing efficiency.

FIG. 2 is a flowchart of a charging processing method according to Embodiment 2 of the present invention. As shown in FIG. 2, the method includes:

Step 101: A centralized network control node SNC receives, in a centralized manner, a service bearer setup request sent by a user, where the setup request includes characteristic information of a service data flow to be processed.

Specifically, when the user performs a communication service by using a wireless network, on one hand, the wireless network provides a corresponding service bearer for the user, that is, allocates a corresponding network resource, and on the other hand, the wireless network also performs charging control on a service data flow of the user. In this embodiment, the SNC receives, in a centralized manner, service bearer setup requests sent when users perform service communication. Because processes of charging processing on the users are the same, an example in which charging processing is performed on a service data flow of only one user is used below. The SNC receives a service bearer setup request sent by the user when the user performs service communication, where the setup request includes characteristic information of a service data flow to be processed. Specifically, the characteristic information includes user identifier information, service bearer type information, and service type information. The user identifier information may be, for example, identifier information of a terminal device of the user, for example, an IMSI. The service bearer type information indicates a network used by the user, and the network may be, for example, a GPRS or a WLAN. The service type information indicates a type of a service, such as WeChat, QQ, or video browsing, currently performed by the user.

Step 102: The SNC obtains, from a policy and charging rules function PCRF entity according to the characteristic information, a charging policy corresponding to the service data flow to be processed.

In this embodiment, after obtaining, from the service bearer setup request sent by the user, the characteristic information of the service data flow to be processed, the SNC obtains, according to the characteristic information, the charging policy corresponding to the service data flow to be processed. Specifically, the SNC may obtain, from the PCRF entity, the charging policy corresponding to the service data flow to be processed, or may obtain, from user subscription data stored in an SPR, the charging policy corresponding to the service data flow to be processed, where the charging policy describes information about rules for charging various service applications, to which the user subscribes, when the user is using the service applications. For example, when the user browses video data by using a GPRS network, the video data is charged online according to traffic used by the video data.

Specifically, the obtaining, by the SNC from a PCRF entity, a charging policy corresponding to the service data flow to be processed includes: sending, by the SNC, a charging policy obtaining request including the characteristic information to the PCRF entity; and receiving, by the SNC, the charging policy that is sent by the PCRF entity after the PCRF entity obtains, by means of querying according to the characteristic information, the charging policy corresponding to the service data flow to be processed.

Step 103: The SNC sends charging control information including the charging policy to a function node FN, so that the FN reports, according to the charging control information, charging information of the service data flow to be processed.

Step 104: The SNC receives the charging information that is reported by the FN according to the charging control information and the service data flow to be processed, and interacts with a charging system, so that the charging system performs, according to the charging information, charging settlement processing on the service data flow to be processed.

Then, the SNC sends, by using an expanded OpenFlow standard protocol interface, the charging control information including the charging policy to the FN. Specifically, the charging control information is carried in an OpenFlow standard message OFPT_FLOW_MOD and is then sent to the FN, so that after receiving the OFPT_FLOW_MOD message, the FN obtains, by means of parsing, the charging control information included in the OFPT_FLOW_MOD message, and reports, according to the charging control information, the charging information of the service data flow to be processed.

Specifically, the SNC receives an OpenFlow standard message OFPT_FLOW_REMOVED that is reported by the FN according to the charging control information and the service data flow to be processed and that carries the charging information, and learns, by parsing the OFPT_FLOW_REMOVED, the charging information of the service data flow to be processed, so as to interact with the charging system, such as an OCS or an OFCS, so that the charging system performs, according to the charging information, charging settlement processing on the service data flow to be processed.

Further, when the charging system is an OCS, generally, the charging control information sent by the SNC to the FN further includes an available credit limit, so that the FN may monitor, according to the available credit limit obtained by parsing the OFPT_FLOW_MOD message, a used limit of the service data flow to be processed. When it is determined, according to the charging policy and the available credit limit that are in the charging control information, that a difference between the used credit limit of the service data flow to be processed and the available credit limit reaches a preset threshold, the FN sends an OpenFlow standard message Packet-in to the SNC, where the Packet-in message carries the used credit limit and a new credit limit that is applied for, so that after receiving the Packet-in message, the SNC sends, to the FN, the OpenFlow standard message OFPT_FLOW_MOD carrying the new credit limit, to respond to the Packet-in message.

In this embodiment, a charging control function is divided, and control plane functions are set in an SNC in a centralized manner. The SNC processes the control plane functions in a centralized manner in a charging processing process of each user, that is, interacts with another related functional entity to obtain a charging policy of a service data flow to be processed, completes charging settlement, and the like. An independent FN completes data plane functions in charging processing, that is, charges, according to the charging policy, the service data flow to be processed, and reports charging information to the SNC without the need of interacting with another functional entity. Functions of a control plane and processing of a data plane are separated in a charging process, a functional entity SNC is responsible for control plane functions, an FN is responsible for data plane functions in charging processing, and interaction between the SNC and the FN is implemented by extending an OpenFlow standard protocol interface. When the FN already existing in a network cannot meet a requirement, a charging processing capability of the network can be expanded as long as an FN is added, which facilitates implementation of flexible configuration. In addition, the control plane is separated from the data plane, which facilitates centralized charging control and distributed data processing, and helps improve processing efficiency.

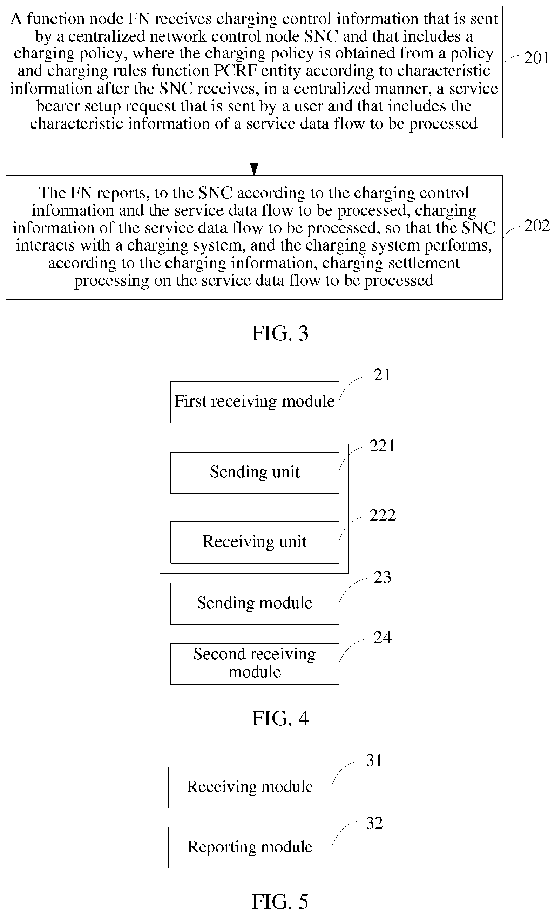

FIG. 3 is a flowchart of a charging processing method according to Embodiment 3 of the present invention. As shown in FIG. 3, the method includes:

Step 201: A function node FN receives charging control information that is sent by a centralized network control node SNC and that includes a charging policy, where the charging policy is obtained from a policy and charging rules function PCRF entity according to characteristic information after the SNC receives, in a centralized manner, a service bearer setup request that is sent by a user and that includes the characteristic information of a service data flow to be processed.

Step 202: The FN reports, to the SNC according to the charging control information and the service data flow to be processed, charging information of the service data flow to be processed, so that the SNC interacts with a charging system, and the charging system performs, according to the charging information, charging settlement processing on the service data flow to be processed.

Because functions of a control plane and a data plane are separated in a process of performing charging processing on service data flows of users, the SNC processes, in a centralized manner, control plane functions related to charging on the service data flows of the users, for example, obtaining a charging policy corresponding to a service data flow of a user from the PCRF, so as to send charging control information including the charging policy to the FN, or to interact with a charging system such as an OCS or an OFCS. One of multiple FNs existing in the system specifically collects statistics on and reports the charging information according to control for the charging control information.

In this embodiment, after obtaining, from the PCRF, the charging policy of the service data flow to be processed, the SNC sends, by using an expanded OpenFlow standard protocol interface, the charging control information including the charging policy to one FN, where the FN may be selected by the SNC according to a processing capability of each FN existing in the charging system. Specifically, the FN receives an OpenFlow standard message OFPT_FLOW_MOD that is sent by the SNC and that carries the charging control information, and the FN obtains, by means of parsing, the charging control information from the OFPT_FLOW_MOD message, so that the service data flow to be processed is charged according to the charging control information, and the charging information of the service data flow to be processed is reported to the SNC by using the expanded OpenFlow standard protocol interface, that is, an OpenFlow standard message OFPT_FLOW_REMOVED carrying the charging information of the service data flow to be processed is reported to the SNC, so that the SNC can parse out the charging information, which is carried in the OFPT_FLOW_REMOVED, of the service data flow to be processed, and then interact with the charging system, for example, an OFCS, to complete charging processing on a current user.

Further, if the charging policy, which is obtained by the SNC from the PCRF, of the service data flow to be processed indicates that the service is charged online, the SNC further needs to obtain, from the OCS, an available credit limit of the service data flow to be processed. Therefore, in addition to the charging policy of the service data flow to be processed, the charging control information that is sent by the SNC to the FN further includes the available credit limit of the service data flow to be processed. The charging control information is carried in the OpenFlow standard message OFPT_FLOW_MOD and is then sent to the FN. Therefore, when determining, according to the charging control information and the service data flow to be processed, that a difference between a used credit limit of the service data flow to be processed and the available credit limit reaches a preset threshold, the FN sends, to the SNC, an OpenFlow standard message Packet-in carrying the used credit limit and a new credit limit that is applied for, so that the SNC responds to the Packet-in message, and sends, to the FN, the OpenFlow standard message OFPT_FLOW_MOD carrying the new credit limit.

In this embodiment, to improve efficiency of performing charging processing on communication services of many users, multiple homogeneous FNs are generally deployed in a network, to implement distributed processing on service data flows of the users. Therefore, after an SNC receives a charging policy returned by a PCRF entity, the SNC determines, according to node processing capability information locally stored in the SNC, a node for processing a service data flow to be processed, where the node processing capability information includes at least one of the following information: remaining computing capability information, remaining bandwidth information, or remaining storage capability information.

FIG. 4 is a schematic structural diagram of a centralized network control node according to Embodiment 4 of the present invention. As shown in FIG. 4, the node includes:
a first receiving module 21, configured to receive, in a centralized manner, a service bearer setup request sent by a user, where the setup request includes characteristic information of a service data flow to be processed;
an obtaining module 22, configured to obtain, from a policy and charging rules function PCRF entity according to the characteristic information, a charging policy corresponding to the service data flow to be processed;
a sending module 23, configured to send charging control information including the charging policy to a function node FN, so that the FN reports, according to the charging control information, charging information of the service data flow to be processed; and
a second receiving module 24, configured to: receive the charging information that is reported by the FN according to the charging control information and the service data flow to be processed, and interact with a charging system, so that the charging system performs, according to the charging information, charging settlement processing on the service data flow to be processed.

Specifically, the obtaining module 22 includes:
a sending unit 221, configured to send a charging policy obtaining request including the characteristic information to the policy and charging rules function PCRF entity; and
a receiving unit 222, configured to receive the charging policy that is sent by the PCRF entity after the PCRF entity obtains, by means of querying according to the characteristic information, the charging policy corresponding to the service data flow to be processed.

Specifically, the sending module 23 is specifically configured to:
send, to the FN, an OpenFlow standard message OFPT_FLOW_MOD carrying the charging control information, so that the FN reports, according to the charging control information, the charging information of the service data flow to be processed.

Specifically, the second receiving module 24 is specifically configured to:
receive an OpenFlow standard message OFPT_FLOW_REMOVED that is reported by the FN according to the charging control information and the service data flow to be processed and that carries the charging information.

Further, the charging control information further includes an available credit limit;
correspondingly, the second receiving module 24 is further configured to:
receive an OpenFlow standard message Packet-in that is sent when the FN determines, according to the charging control information and the service data flow to be processed, that a difference between a used credit limit of the service data flow to be processed and the available credit limit reaches a preset threshold, where Packet-in message carries the used credit limit and a new credit limit that is applied for; and
correspondingly, the sending module 23 is further configured to:
   send, to the FN, the OpenFlow standard message OFPT_FLOW_MOD carrying the new credit limit, to respond to the Packet-in message.

The centralized network control node in this embodiment corresponds to the SNC 11 in the embodiment shown in FIG. 1, and may be configured to execute the technical solution of the embodiment of the method shown in FIG. 2. The implementation principles and technical effects thereof are similar, and details are not described herein again.

FIG. 5 is a schematic structural diagram of a function node according to Embodiment 5 of the present invention. As shown in FIG. 5, the node includes:
a receiving module 31, configured to receive charging control information that is sent by a centralized network control node SNC and that includes a charging policy, where the charging policy is obtained from a policy and charging rules function PCRF entity according to characteristic information after the SNC receives, in a centralized manner, a service bearer setup request that is sent by a user and that includes the characteristic information of a service data flow to be processed; and
a reporting module 32, configured to report, to the SNC according to the charging control information and the service data flow to be processed, charging information of the service data flow to be processed, so that the SNC interacts with a charging system, and the charging system performs, according to the charging information, charging settlement processing on the service data flow to be processed.

Specifically, the receiving module 31 is specifically configured to:
receive an OpenFlow standard message OFPT_FLOW_MOD that is sent by the SNC and that carries the charging control information.

Specifically, the reporting module 32 is specifically configured to:
report, to the SNC according to the charging control information and the service data flow to be processed, an OpenFlow standard message OFPT_FLOW_REMOVED carrying the charging information of the service data flow to be processed.

Further, the charging control information further includes an available credit limit;
the reporting module 32 is further configured to:
when it is determined, according to the charging control information and the service data flow to be processed, that a difference between a used credit limit of the service data flow to be processed and the available credit limit reaches a preset threshold, send, to the SNC, an OpenFlow standard message Packet-in carrying the used credit limit and a new credit limit that is applied for; and
correspondingly, the receiving module 31 is further configured to:
   receive an OpenFlow standard message OFPT_FLOW_MOD that is used by the SNC to respond to the Packet-in message and that carries the new credit limit.

The function node in this embodiment corresponds to the FN 12 in the embodiment shown in FIG. 1, and may be configured to execute the technical solution of the embodiment of the method shown in FIG. 3. The implementation principles and technical effects thereof are similar, and details are not described herein again.

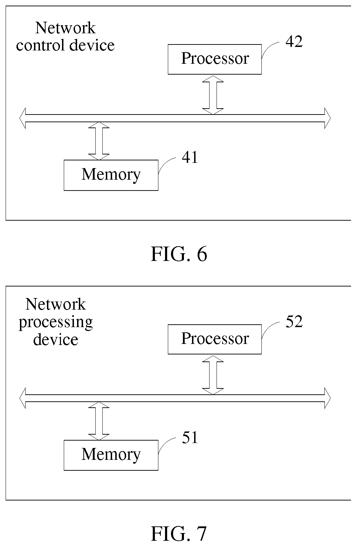

FIG. 6 is a schematic structural diagram of a network control device according to Embodiment 6 of the present invention. As shown in FIG. 6, the control device includes:
a memory 41 and a processor 42 connected to the memory 41, where the memory 41 is configured to store a group of program code, and the processor 42 is configured to invoke the program code stored in the memory 41, to perform the charging processing method in FIG. 2: receiving, in a centralized manner, a service bearer setup request sent by a user, where the setup request includes characteristic information of a service data flow to be processed; obtaining, from a policy and charging rules function PCRF entity according to the characteristic information, a charging policy corresponding to the service data flow to be processed; sending charging control information including the charging policy to a function node FN, so that the FN reports, according to the charging control information, charging information of the service data flow to be processed; and receiving the charging information that is reported by the FN according to the charging control information and the service data flow to be processed, and interacting with a charging system, so that the charging system performs, according to the charging information, charging settlement processing on the service data flow to be processed.

Specifically, the processor 52 is configured to: send a charging policy obtaining request including the characteristic information to the policy and charging rules function PCRF entity; and receive the charging policy that is sent by the PCRF entity after the PCRF entity obtains, by means of querying according to the characteristic information, the charging policy corresponding to the service data flow to be processed.

Specifically, the processor 52 is configured to send, to the FN, an OpenFlow standard message OFPT_FLOW_MOD carrying the charging control information.

Specifically, the processor 52 is configured to receive an OpenFlow standard message OFPT_FLOW_REMOVED that is reported by the FN according to the charging control information and the service data flow to be processed and that carries the charging information.

Further, the charging control information further includes an available credit limit. Specifically, the processor 52 is configured to: receive an OpenFlow standard message Packet-in that is sent when the FN determines, according to the charging control information and the service data flow to be processed, that a difference between a used credit limit of the service data flow to be processed and the available credit limit reaches a preset threshold, where Packet-in message carries the used credit limit and a new credit limit that is applied for; and send, to the FN, the OpenFlow standard message OFPT_FLOW_MOD carrying the new credit limit, to respond to the Packet-in message.

FIG. 7 is a schematic structural diagram of a network processing device according to Embodiment 7 of the present invention. As shown in FIG. 7, the processing device includes:
a memory 51 and a processor 52 connected to the memory 51, where the memory 51 is configured to store a group of program code, and the processor 52 is configured to invoke the program code stored in the memory 51, to perform the charging processing method in FIG. 3: receiving charging control information that is sent by a centralized network control node SNC and that includes a charging policy, where the charging policy is obtained from a policy and charging rules function PCRF entity according to characteristic information after the SNC receives, in a centralized manner, a service bearer setup request that is sent by a user and that includes the characteristic information of a service data flow to be processed; and reporting, to the SNC according to the charging control information and the service data flow to be processed, charging information of the service data flow to be processed, so that the SNC interacts with a charging system, and the charging system performs, according to the charging information, charging settlement processing on the service data flow to be processed.

Specifically, the processor 62 is configured to receive an OpenFlow standard message OFPT_FLOW_MOD that is sent by the SNC and that carries the charging control information.

Specifically, the processor 62 is configured to report, to the SNC according to the charging control information and the service data flow to be processed, an OpenFlow standard message OFPT_FLOW_REMOVED carrying the charging information of the service data flow to be processed.

Further, the charging control information further includes an available credit limit. Specifically, the processor 62 is configured to: when it is determined, according to the charging control information and the service data flow to be processed, that a difference between a used credit limit of the service data flow to be processed and the available credit limit reaches a preset threshold, send, to the SNC, an OpenFlow standard message Packet-in carrying the used credit limit and a new credit limit that is applied for; and receive an OpenFlow standard message OFPT_FLOW_MOD that is used by the SNC to respond to the Packet-in message and that carries the new credit limit.

A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

## Claims

1. A centralized network control node (11), comprising:
a first receiving module (21), configured to receive a service bearer setup request sent by a user, wherein the setup request comprises characteristic information of a service data flow to be processed;
an obtaining module (22), configured to obtain, from a policy and charging rules function PCRF entity (13) according to the characteristic information, a charging policy corresponding to the service data flow to be processed;
a sending module (23), configured to send charging control information comprising the charging policy to a function node FN, by sending, to the FN (12), an OpenFlow standard message OFPT_FLOW_MOD carrying the charging control information; and
a second receiving module (24), configured to: receive the charging information that is reported by the FN (12) according to the charging control information and the service data flow to be processed, by receiving an OpenFlow standard message OFPT_FLOW_REMOVED that is reported by the FN (12) according to the charging control information and the service data flow to be processed and that carries the charging information and interact with a charging system, such as an online charging system, OCS, or an Offline Charging System, OFCS.

2. The node (11) according to claim 1, wherein the obtaining module (22) comprises:
a sending unit (221), configured to send a charging policy obtaining request comprising the characteristic information to the policy and charging rules function PCRF entity (13); and
a receiving unit (222), configured to receive the charging policy that is sent by the PCRF entity (13) after the PCRF entity (13) obtains, by means of querying according to the characteristic information, the charging policy corresponding to the service data flow to be processed.

3. The node (11) according to of claim 1 or 2, wherein the charging control information further comprises an available credit limit;
correspondingly, the second receiving module (24) is further configured to:
receive an OpenFlow standard message Packet-in that is sent when the FN determines, according to the charging control information and the service data flow to be processed, that a difference between a used credit limit of the service data flow to be processed and the available credit limit reaches a preset threshold, wherein Packet-in message carries the used credit limit and a new credit limit that is applied for; and
correspondingly, the sending module (23) is further configured to:
send, to the FN, the OpenFlow standard message OFPT_FLOW_MOD carrying the new credit limit, to respond to the Packet-in message.

4. A function node (12), comprising:
a receiving module (31), configured to receive charging control information that is sent by a centralized network control node SNC (11) and that comprises a charging policy corresponding to a service data flow to be processed, by receiving an OpenFlow standard message OFPT_FLOW_MOD that is sent by the SNC (11) and that carries the charging control information; and
a reporting module (32), configured to report, to the SNC (11) according to the charging control information and the service data flow to be processed, charging information of the service data flow to be processed, by reporting, to the SNC (11) according to the charging control information and the service data flow to be processed, an OpenFlow standard message OFPT_FLOW_REMOVED carrying the charging information of the service data flow to be processed.

5. The node (12) according to claim 4, wherein the charging control information further comprises an available credit limit;
the reporting module (32) is further configured to:
when it is determined, according to the charging control information and the service data flow to be processed, that a difference between a used credit limit of the service data flow to be processed and the available credit limit reaches a preset threshold, send, to the SNC (11), an OpenFlow standard message Packet-in carrying the used credit limit and a new credit limit that is applied for; and
correspondingly, the receiving module (31) is further configured to:
receive an OpenFlow standard message OFPT_FLOW_MOD that is used by the SNC (11) to respond to the Packet-in message and that carries the new credit limit.

6. A charging processing method, comprising:
receiving, by a centralized network control node SNC (11) a service bearer setup request sent by a user, wherein the setup request comprises characteristic information of a service data flow to be processed;
obtaining, by the SNC (11) from a policy and charging rules function PCRF entity (13) according to the characteristic information, a charging policy corresponding to the service data flow to be processed;
sending, by the SNC (11), charging control information comprising the charging policy to a function node FN (12), wherein the sending, by the SNC (11), charging control information comprising the charging policy to a function node FN (12) comprises:
sending, by the SNC (11) to the FN (12), an OpenFlow standard message OFPT_FLOW_MOD carrying the charging control information; and
receiving, by the SNC (11), the charging information that is reported by the FN (12) according to the charging control information and the service data flow to be processed, and interacting with a charging system, such as an online charging system, OCS, or an Offline Charging System, OFCS,
wherein the receiving, by the SNC (11), the charging information that is reported by the FN (12) according to the charging control information and the service data flow to be processed comprises:
receiving, by the SNC (11), an OpenFlow standard message OFPT_FLOW_REMOVED that is reported by the FN (12) according to the charging control information and the service data flow to be processed and that carries the charging information.

7. The method according to claim 6, wherein the obtaining, by the SNC (11) from a policy and charging rules function PCRF entity (13) according to the characteristic information, a charging policy corresponding to the service data flow to be processed comprises:
sending, by the SNC (11), a charging policy obtaining request comprising the characteristic information to the policy and charging rules function PCRF entity (13); and
receiving, by the SNC (11), the charging policy that is sent by the PCRF entity (13) after the PCRF entity (13) obtains, by means of querying according to the characteristic information, the charging policy corresponding to the service data flow to be processed.

8. The method according to any one of claims 6 to 7, wherein the charging control information further comprises an available credit limit;
the receiving, by the SNC (11), the charging information that is reported by the FN (12) according to the charging control information and the service data flow to be processed comprises:
receiving, by the SNC (11), an OpenFlow standard message Packet-in that is sent when the FN (12) determines, according to the charging control information and the service data flow to be processed, that a difference between a used credit limit of the service data flow to be processed and the available credit limit reaches a preset threshold, wherein Packet-in message carries the used credit limit and a new credit limit that is applied for; and
correspondingly, after the receiving, by the SNC (11), the charging information that is reported by the FN (12) according to the charging control information and the service data flow to be processed, the method further comprises:
sending, by the SNC (11) to the FN (12), the OpenFlow standard message OFPT_FLOW_MOD carrying the new credit limit, to respond to the Packet-in message.

9. A charging processing method, comprising:
receiving, by a function node FN (12), charging control information that is sent by a centralized network control node SNC (11) and that comprises a charging policy corresponding to a service data flow to be processed ; and
reporting, by the FN (12) to the SNC (11) according to the charging control information and the service data flow to be processed, charging information of the service data flow to be processed, ;
wherein the receiving, by an FN (12), charging control information that is sent by a centralized network control node SNC (11) and that comprises a charging policy comprises:
receiving, by the FN (12), an OpenFlow standard message OFPT_FLOW_MOD that is sent by the SNC (11) and that carries the charging control information; and
wherein the reporting, by the FN (12) to the SNC (11) according to the charging control information and the service data flow to be processed, charging information of the service data flow to be processed comprises:
reporting, by the FN (12) to the SNC (11) according to the charging control information and the service data flow to be processed, an OpenFlow standard message OFPT_FLOW_REMOVED carrying the charging information of the service data flow to be processed.

10. The method according to claim 9, wherein the charging control information further comprises an available credit limit;
the reporting, by the FN (12) to the SNC (11) according to the charging control information and the service data flow to be processed, charging information of the service data flow to be processed comprises:
when the FN (12) determines, according to the charging control information and the service data flow to be processed, that a difference between a used credit limit of the service data flow to be processed and the available credit limit reaches a preset threshold, sending, to the SNC (11), an OpenFlow standard message Packet-in carrying the used credit limit and a new credit limit that is applied for; and
correspondingly, after the reporting, by the FN (12) to the SNC (11) according to the charging control information and the service data flow to be processed, charging information of the service data flow to be processed, the method further comprises:
receiving, by the FN (12), an OpenFlow standard message OFPT_FLOW_MOD that is used by the SNC (11) to respond to the Packet-in message and that carries the new credit limit.

## Patentansprüche

1. Zentralisierter Netzwerksteuerknoten (11), umfassend:
ein erstes Empfangsmodul (21), konfiguriert zum Empfangen einer durch einen Benutzer gesandten Dienstträger-Einrichtungsanforderung, wobei die Einrichtungsanforderung charakteristische Informationen eines Dienstdatenflusses, der zu verarbeiten ist, umfasst;
ein Erlangungsmodul (22), konfiguriert zum Erlangen, von einer Richtlinien- und Verrechnungsregelnfunktion- bzw. PCRF-Entität (13) gemäß den charakteristischen Informationen, einer Verrechnungsrichtlinie korrespondierend mit dem Dienstdatenfluss, der zu verarbeiten ist;
ein Sendemodul (23), konfiguriert zum Senden von Verrechnungssteuerinformationen, die die Verrechnungsrichtlinie umfassen, an einen Funktionsknoten FN durch Senden, an den FN (12), einer "OpenFlow"-Standardnachricht OFPT_FLOW_MOD, die die Verrechnungssteuerinformationen trägt; und
ein zweites Empfangsmodul (24), konfiguriert zum: Empfangen der Verrechnungsinformationen, die durch den FN (12) gemäß den Verrechnungssteuerinformationen berichtet werden, und des Dienstdatenflusses, der zu verarbeiten ist, durch Empfangen einer OpenFlow-Standardnachricht OFPT_FLOW_REMOVED, die durch den FN (12) gemäß den Verrechnungssteuerinformationen und dem Dienstdatenfluss, der zu verarbeiten ist, berichtet wird und die die Verrechnungsinformationen trägt und mit einem Verrechnungssystem wie einem Online-Verrechnungssystem, OCS, oder einem Offline-Verrechnungssystem, OFCS, interagiert.

2. Knoten (11) nach Anspruch 1, wobei das Erlangungsmodul (22) umfasst:
eine Sendeeinheit (221), konfiguriert zum Senden einer Verrechnungsrichtlinien-Erlangungsanforderung, umfassend die charakteristischen Informationen, an die Richtlinien- und Verrechnungsregelnfunktion- bzw. PCRF-Entität (13); und
eine Empfangseinheit (222), konfiguriert zum Empfangen der Verrechnungsrichtlinie, die durch die PCRF-Entität (13) gesandt wird, nachdem die PCRF-Entität (13) mittels Anfragen gemäß den charakteristischen Informationen die Verrechnungsrichtlinie korrespondierend mit dem Dienstdatenfluss, der zu verarbeiten ist, erlangt.

3. Knoten (11) nach Anspruch 1 oder 2, wobei die Verrechnungssteuerinformationen ferner eine verfügbare Kreditgrenze umfassen;
wobei korrespondierend das zweite Empfangsmodul (24) ferner konfiguriert ist zum:
Empfangen einer "OpenFlow"-Standardnachricht "Packet-in", die gesandt wird, wenn der FN gemäß den Verrechnungssteuerinformationen und dem Dienstdatenfluss, der zu verarbeiten ist, bestimmt, dass eine Differenz zwischen einer verbrauchten Kreditgrenze des Dienstdatenflusses, der zu verarbeiten ist, und der verfügbaren Kreditgrenze einen im Voraus eingestellten Schwellenwert erreicht, wobei eine "Packet-in"-Nachricht die verbrauchte Kreditgrenze und eine neue Kreditgrenze, die beantragt wird, trägt; und
wobei korrespondierend das Sendemodul (23) ferner konfiguriert ist zum:
Senden, an den FN, der "OpenFlow"-Standardnachricht OFPT_FLOW_MOD, die die neue Kreditgrenze trägt, um auf die "Packet-in"-Nachricht zu antworten.

4. Funktionsknoten (12), umfassend:
ein Empfangsmodul (31), konfiguriert zum Empfangen von Verrechnungssteuerinformationen, die durch einen zentralisierten Netzwerksteuerknoten SNC (11) gesandt werden und die eine Verrechnungsrichtlinie korrespondierend mit einem Dienstdatenfluss, der zu verarbeiten ist, tragen, durch Empfangen einer "OpenFlow"-Standardnachricht OFPT_FLOW_MOD, die durch den SNC (11) gesandt wird und die die Verrechnungssteuerinformationen trägt; und
ein Berichterstattungsmodul (32), konfiguriert zum Berichten, an den SNC (11) gemäß den Verrechnungssteuerinformationen und dem Dienstdatenfluss, der zu verarbeiten ist, von Verrechnungsinformationen des Dienstdatenflusses, der zu verarbeiten ist, durch Berichten, an den SNC (11) gemäß den Verrechnungssteuerinformationen und dem Dienstdatenfluss, der zu verarbeiten ist, einer "OpenFlow"-Standardnachricht OFPT_FLOW_REMOVED, die die Verrechnungsinformationen des Dienstdatenflusses, der zu verarbeiten ist, trägt.

5. Knoten (12) nach Anspruch 4, wobei die Verrechnungssteuerinformationen ferner eine verfügbare Kreditgrenze umfassen;
wobei das Berichterstattungsmodul (32) ferner konfiguriert ist zum:
wenn bestimmt wird, gemäß den Verrechnungssteuerinformationen und dem Dienstdatenfluss, der zu verarbeiten ist, dass eine Differenz zwischen einer verbrauchten Kreditgrenze des Dienstdatenflusses, der zu verarbeiten ist, und der verfügbaren Kreditgrenze einen im Voraus eingestellten Schwellenwert erreicht, Senden, an den SNC (11), einer "OpenFlow"-Standardnachricht "Packet-in", die die verbrauchte Kreditgrenze und eine neue Kreditgrenze, die beantragt wird, trägt; und
wobei korrespondierend das Empfangsmodul (31) ferner konfiguriert ist zum:
Empfangen einer "OpenFlow"-Standardnachricht OFPT_FLOW_MOD, die durch den SNC (11) verwendet wird, um auf die "Packet-in"-Nachricht zu antworten, und die die neue Kreditgrenze trägt.

6. Verrechnungsverarbeitungsverfahren, umfassend:
Empfangen, durch einen zentralisierten Netzwerksteuerknoten SNC (11), einer durch einen Benutzer gesandten Dienstträger-Einrichtungsanforderung, wobei die Einrichtungsanforderung charakteristische Informationen eines Dienstdatenflusses, der zu verarbeiten ist, umfasst;
Erlangen, durch den SNC (11) von einer Richtlinien- und Verrechnungsregelnfunktion- bzw. PCRF-Entität (13) gemäß den charakteristischen Informationen, einer Verrechnungsrichtlinie korrespondierend mit dem Dienstdatenfluss, der zu verarbeiten ist;
Senden, durch den SNC (11), von Verrechnungssteuerinformationen, die die Verrechnungsrichtlinie umfassen, an einen Funktionsknoten FN (12), wobei das Senden, durch den SNC (11), von Verrechnungssteuerinformationen, die die Verrechnungsrichtlinie umfassen, an einen Funktionsknoten FN (12) umfasst:
Senden, durch den SNC (11) an den FN (12), einer "OpenFlow"-Standardnachricht OFPT_FLOW_MOD, die die Verrechnungssteuerinformationen trägt; und
Empfangen, durch den SNC (11), der Verrechnungsinformationen, die durch den FN (12) gemäß den Verrechnungssteuerinformationen und dem Dienstdatenfluss, der zu verarbeiten ist, berichtet werden und Interagieren mit einem Verrechnungssystem wie einem Online-Verrechnungssystem, OCS, oder einem Offline-Verrechnungssystem, OFCS,
wobei das Empfangen, durch den SNC (11), der Verrechnungsinformationen, die durch den FN (12) gemäß den Verrechnungssteuerinformationen und dem Dienstdatenfluss, der zu verarbeiten ist, berichtet werden, umfasst:
Empfangen, durch den SNC (11), einer "OpenFlow"-Standardnachricht OFPT_FLOW_REMOVED, die durch den FN (12) gemäß den Verrechnungssteuerinformationen und dem Dienstdatenfluss, der zu verarbeiten ist,
berichtet wird und die die Verrechnungsinformationen trägt.

7. Verfahren nach Anspruch 6,
wobei das Erlangen, durch den SNC (11) von einer Richtlinien- und Verrechnungsregelnfunktion- bzw. PCRF-Entität (13) gemäß den charakteristischen Informationen, einer Verrechnungsrichtlinie korrespondierend mit dem Dienstdatenfluss, der zu verarbeiten ist, umfasst:
Senden, durch den SNC (11), einer Verrechnungsrichtlinien-Erlangungsanforderung, die die charakteristischen Informationen umfasst, an die Richtlinien- und Verrechnungsregelnfunktion- bzw. PCRF-Entität (13); und
Empfangen, durch den SNC (11), der Verrechnungsrichtlinie, die durch die PCRF-Entität (13) gesandt wird, nachdem die PCRF-Entität (13) mittels Abfragen gemäß den charakteristischen Informationen die Verrechnungsrichtlinie korrespondierend mit dem Dienstdatenfluss, der zu verarbeiten ist, erlangt.

8. Verfahren nach einem der Ansprüche 6 bis 7, wobei die Verrechnungssteuerinformationen ferner eine verfügbare Kreditgrenze umfassen; wobei das Empfangen, durch den SNC (11), der Verrechnungsinformationen, die durch den FN (12) gemäß den Verrechnungssteuerinformationen und dem Dienstdatenfluss, der zu verarbeiten ist, berichtet werden, umfasst:
Empfangen, durch den SNC (11), einer "OpenFlow"-Standardnachricht "Packet-in", die gesandt wird, wenn der FN (12) gemäß den Verrechnungssteuerinformationen und dem Dienstdatenfluss, der zu verarbeiten ist, bestimmt, dass eine Differenz zwischen einer verbrauchten Kreditgrenze des Dienstdatenflusses, der zu verarbeiten ist, und der verfügbaren Kreditgrenze einen im Voraus eingestellten Schwellenwert erreicht, wobei die "Packet-in"-Nachricht die verbrauchte Kreditgrenze und die neue Kreditgrenze, die beantragt wird, trägt; und
wobei korrespondierend, nach dem Empfangen, durch den SNC (11), der Verrechnungsinformationen, die durch den FN (12) gemäß den Verrechnungssteuerinformationen und dem Dienstdatenfluss, der zu verarbeiten ist, berichtet werden, das Verfahren ferner umfasst:
Senden, durch den SNC (11) an den FN (12), der "OpenFlow"-Standardnachricht OFPT_FLOW _MOD, die die neue Kreditgrenze trägt, um auf die "Packet-in"-Nachricht zu antworten.

9. Verrechnungsverarbeitungsverfahren, umfassend:
Empfangen, durch einen Funktionsknoten FN (12), von Verrechnungssteuerinformationen, die durch einen zentralisierten Netzwerksteuerknoten SNC (11) gesandt werden und die eine Verrechnungsrichtlinie korrespondierend mit einem Dienstdatenfluss, der zu verarbeiten ist, umfassen; und
Berichten, durch den FN (12) an den SNC (11) gemäß den Verrechnungssteuerinformationen und dem Dienstdatenfluss, der zu verarbeiten ist, von Verrechnungsinformationen des Dienstdatenflusses, der zu verarbeiten ist;
wobei das Empfangen, durch einen FN (12), von Verrechnungssteuerinformationen, die durch einen zentralisierten Netzwerksteuerknoten SNC (11) gesandt werden und die eine Verrechnungsrichtlinie umfassen, umfasst:
Empfangen, durch den FN (12), einer "OpenFlow"-Standardnachricht OFPT_FLOW_MOD, die durch den SNC (11) gesandt wird und die die Verrechnungssteuerinformationen trägt; und
wobei das Berichten, durch den FN (12) an den SNC (11) gemäß den Verrechnungssteuerinformationen und dem Dienstdatenfluss, der zu verarbeiten ist, von Verrechnungsinformationen des Dienstdatenflusses, der zu verarbeiten ist, umfasst:
Berichten, durch den FN (12) an den SNC (11) gemäß den Verrechnungssteuerinformationen und dem Dienstdatenfluss, der zu verarbeiten ist, einer "OpenFlow"-Standardnachricht OFPT_FLOW_REMOVED, die die Verrechnungsinformationen des Dienstdatenflusses, der zu verarbeiten ist, trägt.

10. Verfahren nach Anspruch 9, wobei die Verrechnungssteuerinformationen ferner eine verfügbare Kreditgrenze umfassen;
wobei das Berichten, durch den FN (12) an den SNC (11) gemäß den Verrechnungssteuerinformationen und dem Dienstdatenfluss, der zu verarbeiten ist, von Verrechnungsinformationen des Dienstdatenflusses, der zu verarbeiten ist, umfasst:
wenn der FN (12) bestimmt, gemäß den Verrechnungssteuerinformationen und dem Dienstdatenfluss, der zu verarbeiten ist, dass eine Differenz zwischen einer verbrauchten Kreditgrenze des Dienstdatenflusses, der zu verarbeiten ist, und der verfügbaren Kreditgrenze einen im Voraus eingestellten Schwellenwert erreicht, Senden, an den SNC (11), einer "OpenFlow"-Standardnachricht "Packet-in", die die verbrauchte Kreditgrenze und eine neue Kreditgrenze, die beantragt wird, trägt; und
wobei korrespondierend, nach dem Berichten, durch den FN (12) an den SNC (11) gemäß den Verrechnungssteuerinformationen und dem Dienstdatenfluss, der zu verarbeiten ist, von Verrechnungsinformationen des Dienstdatenflusses, der zu verarbeiten ist, das Verfahren ferner umfasst:
Empfangen, durch den FN (12), einer "OpenFlow"-Standardnachricht OFPT_FLOW_MOD, die durch den SNC (11) verwendet wird, um auf die "Packet-in"-Nachricht zu antworten, und die die neue Kreditgrenze trägt.

## Revendications

1. Nœud de commande de réseau centralisé (11), comprenant :
un premier module de réception (21), configuré pour recevoir une demande de configuration de support de service envoyée par un utilisateur, la demande de configuration comprenant des informations caractéristiques d'un flux de données de service à traiter ;
un module d'obtention (22), configuré pour obtenir, à partir d'une entité de fonction de politique et de règles de facturation PCRF (13) en fonction des informations caractéristiques, une politique de facturation correspondant au flux de données de service à traiter ;
un module d'envoi (23), configuré pour envoyer des informations de commande de facturation comprenant la politique de facturation à un noeud de fonction FN, en envoyant, au FN (12), un message standard OpenFlow OFPT_FLOW_MOD portant les informations de commande de facturation ; et
un deuxième module de réception (24), configuré pour : recevoir les informations de facturation qui sont rapportées par le FN (12) en fonction des informations de commande de facturation et du flux de données de service à traiter, en recevant un message standard OpenFlow OFPT_FLOW_REMOVED qui est rapporté par le FN (12) en fonction des informations de commande de facturation et du flux de données de service à traiter et qui porte les informations de facturation et interagit avec un système de facturation, tel qu'un système de facturation en ligne, OCS, ou un système de facturation hors ligne, OFCS.

2. Noeud (11) selon la revendication 1, le module d'obtention (22) comprenant :
une unité d'envoi (221), configurée pour envoyer une demande d'obtention de politique de facturation comprenant les informations caractéristiques à l'entité de fonction de politique et de règles de facturation PCRF (13) ; et
une unité de réception (222), configurée pour recevoir la politique de facturation qui est envoyée par l'entité PCRF (13) après que l'entité PCRF (13) a obtenu, par interrogation en fonction des informations caractéristiques, la politique de facturation correspondant au flux de données de service à traiter.

3. Nœud (11) selon la revendication 1 ou 2, les informations de commande de facturation comprenant en outre une limite de crédit disponible ;
de manière correspondante, le deuxième module de réception (24) étant en outre configuré pour :
recevoir un message standard OpenFlow de paquet entrant qui est envoyé lorsque le FN détermine, en fonction des informations de commande de facturation et du flux de données de service à traiter, qu'une différence entre une limite de crédit utilisée du flux de données de service à traiter et la limite de crédit disponible atteint un seuil prédéfini,
le message de paquet entrant portant la limite de crédit utilisée et une nouvelle limite de crédit qui est demandée ; et,
de manière correspondante, le module d'envoi (23) étant en outre configuré pour : envoyer, au FN, le message standard OpenFlow OFPT_FLOW_MOD portant la nouvelle limite de crédit, pour répondre au message de paquet entrant.

4. Nœud de fonction (12), comprenant :
un module de réception (31), configuré pour recevoir des informations de commande de facturation qui sont envoyées par un nœud de commande de réseau centralisé SNC (11) et qui comprennent une politique de facturation correspondant à un flux de données de service à traiter, en recevant un message standard OpenFlow OFPT_FLOW_MOD qui est envoyé par le SNC (11) et qui porte les informations de commande de facturation ; et
un module de rapport (32), configuré pour rapporter, au SNC (11) en fonction des informations de commande de facturation et du flux de données de service à traiter, des informations de facturation du flux de données de service à traiter, en rapportant, au SNC (11) en fonction des informations de commande de facturation et du flux de données de service à traiter, un message standard OpenFlow OFPT_FLOW_REMOVED portant les informations de facturation du flux de données de service à traiter.

5. Nœud (12) selon la revendication 4, les informations de commande de facturation comprenant en outre une limite de crédit disponible ;
le module de rapport (32) étant en outre configuré pour :
lorsqu'il est déterminé, en fonction des informations de commande de facturation et du flux de données de service à traiter, qu'une différence entre une limite de crédit utilisée du flux de données de service à traiter et la limite de crédit disponible atteint un seuil prédéfini, envoyer, au SNC (11), un message standard OpenFlow de paquet entrant portant la limite de crédit utilisée et une nouvelle limite de crédit qui est demandée ; et
de manière correspondante, le module de réception (31) étant en outre configuré pour : recevoir un message standard OpenFlow OFPT_FLOW_MOD qui est utilisé par le SNC (11) pour répondre au message de paquet entrant et qui porte la nouvelle limite de crédit.

6. Procédé de traitement de facturation, comprenant :
la réception, par un nœud de commande de réseau centralisé SNC (11), d'une demande de configuration de support de service envoyée par un utilisateur, la demande de configuration comprenant des informations caractéristiques d'un flux de données de service à traiter ;
l'obtention, par le SNC (11) à partir d'une entité de fonction de politique et de règles de facturation PCRF (13), en fonction des informations caractéristiques, d'une politique de facturation correspondant au flux de données de service à traiter ;
l'envoi, par le SNC (11), d'informations de commande de facturation comprenant la politique de facturation à un nœud de fonction FN (12), l'envoi, par le SNC (11), d'informations de commande de facturation comprenant la politique de facturation à un nœud de fonction FN (12) comprenant :
l'envoi, par le SNC (11) au FN (12), d'un message standard OpenFlow OFPT_PLOW_MOD portant les informations de commande de facturation ; et
la réception, par le SNC (11), des informations de facturation qui sont rapportées par le FN (12) en fonction des informations de commande de facturation et du flux de données de service à traiter, et l'interaction avec un système de facturation, tel qu'un système de facturation en ligne, OCS, ou un système de facturation hors ligne, OFCS, la réception, par le SNC (11), des informations de facturation qui sont rapportées par le FN (12) en fonction des informations de commande de facturation et du flux de données de service à traiter comprenant :
la réception, par le SNC (11), d'un message standard OpenFlow OFPT_FLOW_REMOVED qui est rapporté par le FN (12) en fonction des informations de commande de facturation et du flux de données de service à traiter et qui porte les informations de facturation.

7. Procédé selon la revendication 6, l'obtention, par le SNC (11) à partir d'une entité de fonction de politique et de règles de facturation PCRF (13) en fonction des informations caractéristiques, d'une politique de facturation correspondant au flux de données de service à traiter comprenant :
l'envoi, par le SNC (11), d'une demande d'obtention de politique de facturation comprenant les informations caractéristiques à l'entité de fonction de politique et de règles de facturation PCRF (13) ; et
la réception, par le SNC (11), de la politique de facturation qui est envoyée par l'entité PCRF (13) après que l'entité PCRF (13) a obtenu, par interrogation en fonction des informations caractéristiques, la politique de facturation correspondant au flux de données du service à traiter.

8. Procédé selon l'une quelconque des revendications 6 et 7, les informations de commande de facturation comprenant en outre une limite de crédit disponible ;
la réception, par le SNC (11), des informations de facturation qui sont rapportées par le FN (12) en fonction des informations de commande de facturation et du flux de données de service à traiter comprenant :
la réception, par le SNC (11), d'un message standard Open Flow de paquet entrant qui est envoyé lorsque le FN (12) détermine, en fonction des informations de commande de facturation et du flux de données de service à traiter, qu'une différence entre une limite de crédit utilisée du flux de données de service à traiter et la limite de crédit disponible atteint un seuil prédéfini, le message de paquet entrant portant la limite de crédit utilisée et une nouvelle limite de crédit qui est demandée ; et,
de manière correspondante, après la réception, par le SNC (11), des informations de facturation qui sont rapportées par le FN (12) en fonction des informations de commande de facturation et du flux de données de service à traiter, le procédé comprenant en outre :
l'envoi, par le SNC (11) au FN (12), du message standard OpenFlow OFPT_FLOW_MOD portant la nouvelle limite de crédit, pour répondre au message de paquet entrant.

9. Procédé de traitement de facturation, comprenant :
la réception, par un nœud de fonction FN (12), d'informations de commande de facturation qui sont envoyées par un nœud de commande de réseau centralisé SNC (11) et qui comprennent une politique de facturation correspondant à un flux de données de service à traiter ; et
le rapport, par le FN (12) au SNC (11) en fonction des informations de commande de facturation et du flux de données de service à traiter, d'informations de facturation du flux de données de service à traiter, ;
la réception, par un FN (12), d'informations de commande de facturation qui sont envoyées par un nœud de commande de réseau centralisé SNC (11) et qui comprennent une politique de facturation comprenant :
la réception, par le FN (12), d'un message standard OpenFlow OFPT_FLOW_MOD qui est envoyé par le SNC (11) et qui porte les informations de commande de facturation ; et
le rapport, par le FN (12) au SNC (11) en fonction des informations de commande de facturation et du flux de données de service à traiter, d'informations de facturation du flux de données de service à traiter comprenant :
le rapport, par le FN (12) au SNC (11) en fonction des informations de commande de facturation et du flux de données de service à traiter, d'un message standard OpenFlow OFPT_FLOW_REMOVED portant les informations de facturation du flux de données de service à traiter.

10. Procédé selon la revendication 9, les informations de commande de facturation comprenant en outre une limite de crédit disponible ;
le rapport, par le FN (12) au SNC (11), en fonction des informations de commande de facturation et du flux de données de service à traiter, d'informations de facturation du flux de données de service à traiter comprenant :
lorsque le FN (12) détermine, en fonction des informations de commande de facturation et du flux de données de service à traiter, qu'une différence entre une limite de crédit utilisée du flux de données de service à traiter et la limite de crédit disponible atteint un seuil prédéfini, l'envoi, au SNC (11), d'un message standard OpenFlow de paquet entrant portant la limite de crédit utilisée et une nouvelle limite de crédit qui est demandée ; et
de manière correspondante, après le rapport, par le FN (12) au SNC (11) en fonction des informations de commande de facturation et du flux de données de service à traiter, d'informations de facturation du flux de données de service à traiter, le procédé comprenant en outre :
la réception, par le FN (12), d'un message standard OpenFlow OFPT_FLOW_MOD qui est utilisé par le SNC (11) pour répondre au message de paquet entrant et qui porte la nouvelle limite de crédit.
